# EUROPEAN PATENT SPECIFICATION

(11) **EP 4 237 262 B1**
(45) Date of publication and mention of the grant of the patent: **04.06.2025**
(21) Application number: 21806417.8
(22) Date of filing: 18.10.2021
(51) Int. Cl.: B60C 23/04, B29D 30/00, B60C 19/00

(54) **TIRE COMPRISING A MONITORING DEVICE**
REIFEN MIT EINER ÜBERWACHUNGSVORRICHTUNG
PNEU COMPRENANT UN DISPOSITIF DE SURVEILLANCE

(30) Priority: 27.10.2020 IT 202000025513
(43) Date of publication of application: 06.09.2023
(73) Proprietor: Pirelli Tyre S.p.A., 20126 Milano (IT)
(72) Inventor: SCALTRITTI, Dario, 20126 MILANO (IT); GUERRA, Silvia, 20126 MILANO (IT); TADIELLO, Luciano, 20126 MILANO (IT)
(74) Representative: Tirloni, Bartolomeo
(86) International application number: PCT/IT2021/050336
(87) International publication number: WO 2022/091150

(56) References cited:
- WO-A1-2019/123118
- DE-A1- 102007 030 232
- DE-A1- 102007 030 238

## Description

### Technical field of the invention

The present invention relates to a tyre comprising a monitoring device.

### State of the art

Typically, a tyre has a substantially toroidal structure around an axis of rotation thereof during operation, and it has an equatorial plane perpendicular to the axis of rotation, said equatorial plane being typically a plane of (substantial) geometric symmetry (e.g. neglecting any minor asymmetries, such as the tread design and/or the writings on the sides and/or the internal structure).

By "inner cavity" it is meant the space delimited by the inner surface of tyre and by the surface of the mounting rim facing towards the inner surface of the tyre, when mounted.

By 'crown portion' it is meant the portion of tyre placed at the tread band.

The terms "radial" and "axial" are used with reference respectively to a direction perpendicular and to a direction parallel to the axis of rotation of the tyre.

The term "tangential" is used with reference to a direction generally oriented according to the rolling direction of the tyre, perpendicular to both the radial direction and the axial direction.

By "footprint" it is meant the portion of outer surface of the tread band (and by extension the part of crown portion corresponding to such portion of surface) which, during the rolling of the tyre mounted and subjected to a load (for example due the mounting under a vehicle), is in instant contact with the rolling surface. The footprint typically has substantially null curvature (or substantially infinite radius of curvature), or in any case it substantially assumes the conformation of the rolling surface.

There are known monitoring devices fixed to the inner surface of a tyre at the crown portion for detecting one or more physical quantities of the tyre, such as for example temperature, pressure, acceleration of the inner surface, deformation of the inner surface, etc.

The document WO2018/065846A1 discloses a device for securing an electronic unit to a tyre, the device comprising a base formed by elastomeric material on which a module comprising the electronic unit is stably fixed. The lower surface of the base, intended for being glued to the tyre's surface, is coated by means of a pressure sensitive adhesive.

The document WO2019/123118A1 discloses a tyre monitoring device comprising an electronic unit enclosed in an encapsulation material. The encapsulation material forms a single body comprising an upper portion, in which the electronic unit is enclosed, and a lower portion, comprising a base surface intended for fixing the device to the inner surface of the tyre.

The document DE102007001279A1 discloses a tyre and an electronic module arranged on an inner side of the tyre and in which electronic components are embedded. The electronic module consists of two different sealing compounds which exhibit different physical characteristics. A first sealing compound is connected with the inner side of the tyre by an adhesive layer and it consists of a soft material and a second sealing compound consists of a hard material. The electronic components are embedded into both the sealing compounds.

The document DE102007030238A1 discloses a pneumatic vehicle tyre with an electronic module.

### Summary of the invention

In the context of tyres comprising monitoring devices, the Applicant has faced the problem of reaching, with such tyres, higher and higher speeds, even up to the maximum homologation speed of the tyre (typically higher than 300 km/h or even higher than 350 km/h).

The Applicant has observed, after tests performed both in laboratory and on track, that the known monitoring devices, when used at the aforesaid very high speeds, undergo various problems, including the possible detachment from the tyre, with consequent damage and/o destruction of the device and/or tyre and loss of functionality.

At the regions of entry and exit from the footprint, due to the deformation suffered by the tyre in the contact with the rolling surface, the radial acceleration to which the monitoring device is subjected is greater than in the out-of-footprint regions. It follows that the radial acceleration of the monitoring device undergoes a rapid and cyclical variation at high frequency, which in turn generates a corresponding cyclic variation of the radial force acting on the monitoring device.

Furthermore, in some devices a greater concentration of radial force has been observed at the substantially central portion of the monitoring device and containing the electronic unit, in which most of the mass of the whole device is typically concentrated, with respect to a peripheral portion of the device itself, placed externally to the projection of the central portion on the plane in which the base lies, wherein typically there is a lower concentration of mass.

Without limiting to any theory, the Applicant believes that this imbalance in the radial forces, together with their cyclic variation at the entry and exit from the footprint, affects - in particular at very high speeds - the layer of adhesive that secures the device to the tyre. In fact, it is believed that the adhesive located at the substantially central portion of the device undergoes more intense radial stretching and compression cycles than the adhesive located at the peripheral portion of the device. The Applicant believes that this phenomenon generates a sort of "pumping" on the adhesive which induces a migration thereof from the centre towards the periphery of the gluing surface, where it accumulates.

It results in a change of the adhesion properties of the device to the tyre, with consequent generation of localized stresses and scarcity of adhesive at the central portion of the monitoring device, which can trigger phenomena of breakage of the monitoring device and/or of detachment of the device from the tyre.

In an attempt to mitigate this phenomenon, the Applicant has first tried to increase the thickness of the glue, to increase the possibility of the glue itself to stretch. However, the Applicant has not observed appreciable improvements. In some cases, the Applicant has found that this increase of thickness increases, at the same time, the local temperature of the tyre, risking to compromise the integrity of the tyre and/or of the monitoring device. This is particularly true in case of use of pressure sensitive adhesives (PSA), which owe their adhesion properties to an energy absorption mechanism linked to a higher viscous component with respect to the elastic one. On the other hand, this high viscous component brings a great heat development as a consequence of cyclic stress.

Furthermore, the Applicant has observed that the temperature increase of the adhesive layer (in particular of PSA) can increase the fluidity of the adhesive itself with consequent increase in the migration phenomenon.

Surprisingly, the Applicant has found that it is possible to maintain a firm fixing of a monitoring device even at very high speeds by applying the layer of adhesive in a spatially selective manner on the gluing surface, namely removing a part of the adhesive, as described below.

According to an aspect the invention relates to a tyre comprising a monitoring device according to claim 1.

The monitoring device comprises a housing portion and a base portion mutually integral, said base portion having a coupling surface in single-piece intended for fixing the monitoring device to the tyre, wherein a projection of said housing portion onto said coupling surface has an extension lower than said coupling surface.

The monitoring device comprises an electronic unit housed in said housing portion.

The monitoring device is fixed to an inner surface of said tyre at a crown portion of said tyre by an adhesive interposed between said coupling surface and said inner surface.

A first region of said coupling surface is covered by said adhesive and a second region of said coupling surface, complementary to said first region, is free of adhesive.

Said second region is contained within said projection of said housing portion onto said coupling surface.

The Applicant has realized that the fact that a region of the coupling surface contained within a projection of the housing portion (which contains the electronic unit) on the coupling surface itself is free of adhesive, allows to reduce the amount of adhesive precisely at the region of the coupling surface in which the adhesive itself would be subjected in a more intense way to the aforesaid radial stretching and compression cycles. The aforementioned "pumping" and migration phenomena of the adhesive are thus reduced, and even eliminated, preventing the accumulation of important portions of adhesive in the peripheral region of the coupling surface and therefore mitigating or eliminating the variation in the adhesion properties of the device to the tyre and the onset of consequent localized stresses and/or of excessive temperature increase. The Applicant has found that in this way it is possible to obtain a stable gluing of the monitoring device to the inner surface of the tyre even at the maximum homologation speed of the tyre, without detachment of the device itself and/or without an excessive increase in the local temperature which could damage the tyre or the electronics of the device itself.

The present invention can have one or more of the following preferred features. Preferably said first region entirely surrounds said second region.

Preferably said first region is continuous and/or said second region is continuous.

Preferably said housing portion is arranged in (substantially) central position of said base portion, more preferably of said coupling surface. In this way the device is balanced and the stability of the device once glued is increased.

Preferably a projection of a centre of mass of said housing portion onto said coupling surface falls in a central position of said second region. In this way, the region free of adhesive is arranged in rational way with respect to the zone with greatest mass concentration of the device.

Preferably said second region is arranged in (substantially) central position of said projection of said housing portion. Preferably the housing portion has at least axial symmetry and mass substantially equally distributed around the axis of symmetry (to limit and/or avoid imbalances and/or the onset of force momenta on the device during the rotation of the tyre).

Preferably said second region has a plan extension greater than or equal to 45%, more preferably greater than or equal to 55%, of said projection of the housing portion. Preferably said second region has a plan extension less than or equal to 95%, more preferably less than or equal to 85%, of said projection of the housing portion. These ranges of values are optimal for obtaining the gluing of the device and at the same time for reducing (or avoiding) the problems described above.

Preferably said second region reproduces, with a scale factor, a shape of said projection of the housing portion. In this way the second region adapts itself to the geometry of the housing portion, with a substantial uniformity of distribution of the adhesive.

Preferably a distance measured along the coupling surface between an edge of said second region and an ideal edge of said projection of said housing portion is equal to at least 1 mm, more preferably to at least 2 mm, along an entire development of said edge of the second region. In other words, on the coupling surface there is at least 1 millimetre of adhesive between the ideal edge of the projection of the housing portion on the coupling surface and the beginning of the second region. By ideal edge of the projection of the housing portion it is meant the projection of the entire housing portion considered in its maximum encumbrance. Preferably said distance is at most 5 mm. The Applicant has verified that the aforementioned values determine a quantity of adhesive to be placed within the projection of the housing portion useful for gluing the monitoring device.

Preferably said adhesive is a pressure sensitive adhesive (PSA). In this way, the gluing of the device to the inner surface of the tyre can be performed using an extremely simple and rapid procedure.

In preferred embodiments, the pressure sensitive adhesive can be an acrylic adhesive, a silicone adhesive, a butyl adhesive, a natural rubber-based adhesive or a block copolymer-based adhesive. Optionally, the material of the adhesive can be reinforced by adding fibres.

Said adhesive has a, preferably uniform, thickness less than or equal to 200 µm, more preferably less than or equal to 150 µm. The Applicant has experimentally observed that these thicknesses, reduced with respect to the thicknesses typically used (equal to about 300 µm), considerably mitigate the problem of damage of the sensor and/or of the tyre due to overheating, for example in terms of increasing the time lapsed before the fault occurs, as better explained below.

Preferably said housing portion comprises a rigid body suitable for housing said electronic unit. In this way the electronic unit is firmly housed. For example, the rigid body can be made of plastic material, and/or by means of resins (e.g. epoxy or polyurethane resin), and/or of sufficiently rigid elastomeric material. Preferably said projection of the housing portion coincides with a projection of the rigid body (considered in its maximum encumbrance).

Preferably said base portion has a perimetral edge free of corners, cusps and/or portion with small curvature radii. Preferably said base portion has a circular or oval perimetral edge. This allows to reduce the onset of cracks due to the concentration of stresses in the corners or in any case at the portions with small curvature radii. The onset of trigger points for localized detachments is also reduced.

In one embodiment said base portion has a perimetral edge with wavelike trend along a (substantially) circular or oval generating line.

Preferably said housing portion, more preferably said rigid body, has substantially cylindrical or prismatic shape.

Preferably said base portion comprises a plurality of reinforcing elements. Preferably said reinforcing elements can comprise textile or metallic filaments or cords, for example made of one or more of the following textile materials: aramid, rayon, polyester, nylon, lyocell. The expression "one or more textile materials" comprises the case in which only one material is used for all the textile cords or filaments used in the base portion, or the case in which in the base portion more materials are used within mixed filaments or cords (for example filaments or cords of one material alternated with filaments or cords of another material), or the case in which in the base portion multiple materials are used in hybrid filaments or cords (for example cords comprising filaments of two different materials). The reinforcing elements can also be made by, or can comprise, metal (possibly hybrid metal/textile) filaments or cords, for example thin steel wires. Preferably said reinforcing elements are arranged with a density comprised between 30 cords/dm and 500 cords/dm.

Preferably said monitoring device comprises an encapsulation material which at least partially encloses said electronic unit. In this way the electronic unit is further protected.

Preferably said encapsulation material is a polyurethane material or a polyurea. Preferably said polyurethane material can be a polyether-based polyurethane material.

Preferably said encapsulation material realizes with continuity at least part of said housing portion (e.g. it at least partially fills the rigid body) and at least part of said base portion (in particular said coupling surface) to make said housing portion and said base portion mutually integral. More preferably said encapsulation material entirely realizes said base portion (and said coupling surface). In this way, the two portions are made in single piece, to the advantage of a firm interconnection between the two portions.

Preferably said reinforcing elements are associated with, or incorporated into, said encapsulation material.

In one alternative embodiment said base portion is made by a layer of elastomeric material. Typically, the elastomeric material may comprise a rubber (e.g. diene or butyl rubber) reinforced with carbon black. In this way a material that is highly compatible with the materials used for the inner surface of the tyre is used.

In one embodiment, said housing portion and said base portion are distinct from each other and they are made mutually integral by gluing with structural adhesive. Preferably the structural adhesive is selected from the following: cyanoacrylate-based adhesive, polyurethane-based adhesive, epoxy adhesive, acrylic adhesive.

Preferably said electronic unit comprises at least one sensor for sensing at least one of the following physical quantities: temperature, pressure, acceleration, deformation; a processing unit; a transceiver.

Preferably said at least one sensor is suitable for sensing at least two among the following physical quantities: temperature, pressure, acceleration, deformation, for example temperature and pressure. Even more preferably said at least one sensor is suitable for sensing at least three, or even all four, said physical quantities. Preferably said at least one sensor is suitable for sensing said acceleration, more preferably at least one component (axial, radial and/or tangential) of said acceleration. In this way the monitoring device provides particularly useful data for determining the condition and/or the functioning of the tyre, and/or the behaviour of the vehicle on which it is mounted.

Preferably said monitoring device comprises an electric power supplier electrically connected to said electronic unit.

By 'electric power supplier' it is meant a component structured to provide electric power, whether the supplied power is pre-accumulated (as in accumulators, e.g. the batteries or the capacitors) or whether the supplied power is generated and/or received in place at real time (such as for example in the power recovery devices, or 'energy harvesting', combined or not with power accumulators).

Typically said electric power supplier is an electric power accumulator, more preferably comprising a battery, for example a button battery.

### Brief description of the figures

Figure 1 shows a schematic, perspective and partial view of a section of tyre comprising a monitoring device according to the present invention;
figure 2 schematically shows a side sectional view of an embodiment of the monitoring device according to the present invention applied to a portion of tyre;
figure 3 schematically shows a bottom view of the monitoring device of figure 2.

### Detailed description of some embodiments of the invention

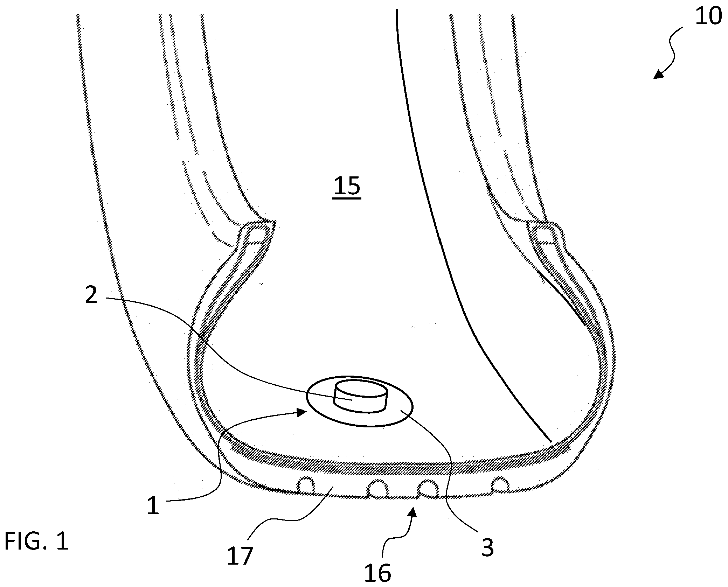

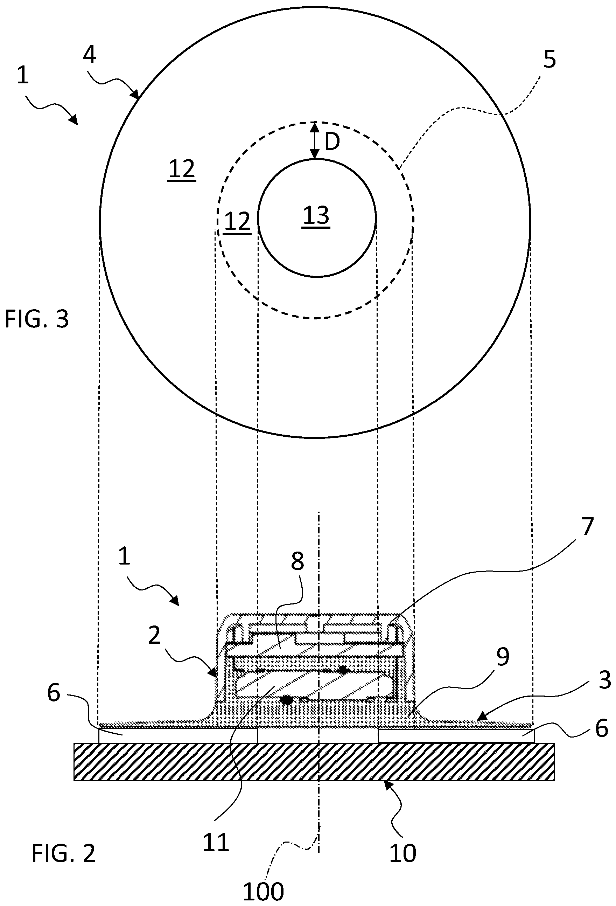

The features and the advantages of the present invention will be further apparent from the following detailed description of some embodiments, presented by way of non-limiting example of the present invention, with reference to the attached figures. In figure 1, with the reference number 10 it is shown a tyre (in partial perspective section) comprising a monitoring device 1 according to the present invention. Exemplarily the monitoring device 1 comprises a housing portion 2 and a base portion 3 mutually integral, the base portion 3 having a coupling surface 4 in single-piece intended for fixing the monitoring device to the tyre (exemplarily coinciding with a base face of the base portion facing the tyre), wherein a projection 5 (shown by dashed line in figure 3) of the housing portion 2 onto the coupling surface 4 has an extension lower than the coupling surface 4.

Exemplarily the base portion 3 has circular perimetral edge and the housing portion 2 comprises a rigid body 7 having cylindrical shape, wherein the housing portion 2 is exemplarily arranged in central position of the base portion (and of the coupling surface 4). Exemplarily an axis 100 of the rigid body 7 passes through a centre (not shown) of the base portion 3. Exemplarily (figs. 2 and 3) the projection 5 of the housing portion 2 coincides with a projection of the rigid body 7.

Exemplarily the monitoring device 1 comprises an electronic unit 8, schematically shown in figure 2, housed in the housing portion 2. Exemplarily the rigid body 7 is suitable for housing the electronic unit.

Exemplarily the monitoring device 1 comprises an electric power supplier 11 (exemplarily a button battery) electrically connected to the electronic unit 8.

Exemplarily the monitoring device 1 comprises an encapsulation material 9 (e.g. a polyurethane material) which realizes with continuity at least part of the housing portion 2, enclosing the electric power supplier 11 and at least partially the electronic unit 8, and entirely the base portion 3 (and the coupling surface 4) to make the housing portion and the base portion mutually integral. Exemplarily (not shown) the encapsulation material is poured in fluid form into the rigid body 7 to incorporate, after solidification, at least partially the electronic unit 8 and the electric power supplier 11 and to realize the base portion.

Exemplarily the base portion 3 comprises a plurality of reinforcing elements (not shown) incorporated into the encapsulation material (at least at the base portion).

The monitoring device exemplarily shown in figure 2 is of the type described in detail in the document WO2019/123118A1 in the name of the same Applicant.

In one alternative embodiment (not shown) the monitoring device can be of the type described in the document WO2018/065846A1 in the name of the same Applicant. In this embodiment, the base portion is made by a layer of elastomeric material (typically comprising a rubber reinforced with carbon black), and the housing portion and the base portion are distinct from each other and they are made mutually integral by gluing with structural adhesive (for example selected from the following: cyanoacrylate-based adhesive, polyurethane-based adhesive, epoxy adhesive, acrylic adhesive).

Exemplarily the electronic unit 8 comprises at least one sensor (not shown) for sensing at least one of the following physical quantities: temperature, pressure, acceleration, deformation; a processing unit (not shown); a transceiver (not shown). The structure and/or the functioning of these components will not be further described as they are substantially known (see for example the two aforementioned documents WO2019/123118A1 and WO2018/065846A1).

Exemplarily the monitoring device 1 is fixed to an inner surface 15 of the tyre 10 at a crown portion 16 of the tyre 10 (i.e. the portion of tyre placed at the tread band 17) by an adhesive 6 interposed between the coupling surface 4 and the inner surface 15.

Exemplarily a first region 12 (figures 2 and 3) of the coupling surface 4 is covered by the adhesive 6 and a second region 13 of the coupling surface 4, complementary to the first region 12, is free of adhesive 6.

Preferably, the second region 13 is contained within the projection 5 of the housing portion 2 onto the coupling surface 4. For example, the second region 13 has circular shape concentric to the projection 5 of the housing portion 2, which is also circular. Exemplarily (not shown) a projection of a centre of mass of the housing portion 2 onto the coupling surface 4 falls in a central position of the second region 13.

Preferably, the first region 12 and the second region 13 are continuous. For example, the first region 12 has circular crown shape and completely surrounds the second region 13.

Exemplarily the second region 13 has a plan extension equal to about 80% of the projection 5 of the housing portion 2.

With reference to figure 3, it shows the subdivision of the coupling surface respectively in the first and in the second region (solid line), together with the plan encumbrances of the projection of the housing portion (dashed line). For the sake of better clarity, the extensions of the adhesive 6 and of the base portion 3 and of housing portion 2 of the monitoring device shown in figure 3 have been correlated by dashed lines to the surfaces of figure 3.

Exemplarily a distance D measured along the coupling surface 4 between an edge of the second region 13 and an ideal edge of the projection 5 of the housing portion 2 is equal to about 2.6 mm (exemplarily, given the cylindrical symmetry of the monitoring device 1, the distance D is a constant radial distance along an entire development of the edge of the second region).

Exemplarily the adhesive 6 is a pressure sensitive adhesive (PSA), chosen from the following: acrylic adhesive, silicone adhesive, butyl adhesive, natural rubber-based adhesive or block copolymer-based adhesive.

Exemplarily the adhesive 6 has a uniform thickness equal to about 80 µm (in figure 2 the thickness of the adhesive is shown not in scale for better clarity).

### COMPARATIVE EXAMPLES

The spatially selective gluing according to the present invention was tested by the Applicant in three different experimental contexts, described below in detail in the comparative examples A, B, C and D.

For the experimental tests, monitoring devices of the type described in the document WO2019/123118A1 have been used, having a diameter of the base portion equal to 55 mm, a diameter of the housing portion (e.g. diameter of the rigid body 7) equal to 25 mm, and a surface extension of the second region equal to 80% of the projection of the housing portion.

The type of tyres used was front and rear tyres, produced by the same Applicant, suitable for sport vehicles.

In two of the three experimental contexts (namely for examples A and B), the results obtained by the spatially selective gluing were compared to those obtained by applying a complete gluing to the same type of monitoring device (i.e. 100% of the coupling surface covered with adhesive). The type of tyres used for the devices with complete gluing was the same as above.

In example C two spatially selective gluing according to the present invention having same surface extension of the second region, distinct from each other by the thickness of the adhesive applied to the coupling surface, were instead compared. The test performed was one of those of example A.

### Example A

The Applicant has performed an indoor high-speed thermomechanical cyclic fatigue test, based on the speed profiles of the certification tests GB/T (38°C ambient temperature - 1,7 m road wheel) and ECE (25°C ambient temperature - 2,0 m road wheel) for Y or (Y) tyres, which involves the rotation of the tyre under conditions that simulate the on-road application. The latter, in particular, is simulated through a wheel (called "road wheel") respectively having the aforementioned diameters, on which the tyre is placed with contact, the tyre being in turn subjected to a (constant) load.

The test involves an initial ramp increase of the tyre rotation speed and the maintenance of the reached value for a first time interval, and subsequently the step increase of the speed and the maintenance of each speed value for a respective given time (in the example equal to 10 minutes) until reaching a speed of 300 km/h (the speeds are reported in terms of linear speeds corresponding to the rotation of the tyre).

In the present implementation, the test was hardened by continuing above 300 km/h, further increasing the speed by 10 km/h every 10 minutes until the failure of tyre and/or of the monitoring device.

The following table shows the comparison between the obtained results:

| **Tyre type** | **Test type** | **% extension second region** | **% coupling surface covered by adhesive** | **Adhesive thickness** | **Result** | **Type of test ending** |
|---|---|---|---|---|---|---|
| 245/35R20 Pzero | A (ECE) | 100% | 100% | 300 µm | 10'@310 km/h | Failure of monitoring device by breakage/detachment |
| 245/35R20 Pzero | A (ECE) | 100% | 100% | 120 µm | 10'@320 km/h | Failure of monitoring device by breakage/detachment |
| 245/35R20 Pzero | A (ECE) | 63% | 87% | 120 µm | 10' @340 km/h | Failure of tyre/electronics |
| 305/30R20 Pzero | A (GB/T) | 100% | 100% | 300 µm | 10'@290 km/h | Failure of monitoring device by breakage/detachment |
| 305/30R20 Pzero | A (GB/T) | 100% | 100% | 120 µm | 7'@300 km/h | Failure of monitoring device by breakage/detachment |
| 305/30R20 Pzero | A (GB/T) | 63% | 87% | 120 µm | 5'@310 km/h | Failure of tyre/electronics |

Experimentally it is observed that the gluing of the monitoring device according to the present invention allows to achieve higher speeds than the speeds achieved in presence of complete gluing of the monitoring device. It is also noted that for the tyres comprising the monitoring device with spatially selective gluing, the end of the test is due to the failure of the tyre and/or of the electronics (e.g. due to local overheating), but not to the detachment and/or to the breakage of the monitoring device (as instead occurs in cases of complete gluing).

### Example B

The gluing tightness of the monitoring device was evaluated by an indoor test of validation of the maximum homologation speed of the tyre according to GB/T (38°C ambient temperature - 1,7 m road wheel, first table) or ECE (25°C ambient temperature - 2,0 m road wheel, second table) standard, which involves (using an experimental apparatus similar to that described above) the ramp increase of the speed until reaching the maximum homologation linear speed of the given type of tyre (exemplarily equal to 350 km/h) and the maintenance of this homologation speed for a given time interval (also in this case the speeds are reported in terms of linear speeds).

The following table shows the comparison between the obtained results:

| **Tyre type** | **Test type** | **% extension second region** | **% coupling surface covered by adhesive** | **Adhesive thickness** | **Test result** | **Type of test ending** |
|---|---|---|---|---|---|---|
| 245/35R20 Pzero | B (GB/T) | 100% | 100% | 120 µm | Fail | Failure of monitoring device by breakage/detachment |
| 245/35R20 Pzero | B (GB/T) | 63% | 87% | 120 µm | Pass | - |
| 305/30R20 Pzero | B (GB/T) | 100% | 100% | 120 µm | Fail | Failure of monitoring device by breakage/detachment |
| 305/30R20 Pzero | B (GB/T) | 63% | 87% | 120 µm | Pass | - |

The gluing method according to the present invention allows the tyre comprising the monitoring device to pass the test, while the breakage and/or the detachment of the monitoring device is observed in case of complete gluing of the latter.

Conversely, the following table reports the experimental results obtained with further types of tyres incorporating monitoring devices with spatially selective gluing according to the present invention and subjected to the aforementioned test of validation of the maximum homologation speed (according to ECE standard):

| **Tyre type** | **Test type** | **% extension second region** | **% coupling surface covered by adhesive** | **Adhesive thickness** | **Test result** | **Maximum achieved speed [km/h]** |
|---|---|---|---|---|---|---|
| 245/35R20 Trofeo | B (ECE) | 63% | 87% | 120 µm | Pass | 340 |
| 305/30R20 Trofeo | B (ECE) | 63% | 87% | 120 µm | Pass | 340 |
| 325/30R21 Trofeo | B (ECE) | 63% | 87% | 120 µm | Pass | 350 |
| 295/30R20 Trofeo | B (ECE) | 63% | 87% | 120 µm | Pass | 340 |
| 285/35R20 Trofeo | B (ECE) | 63% | 87% | 120 µm | Pass | 340 |
| 225/35R19 Trofeo | B (ECE) | 63% | 87% | 120 µm | Pass | 340 |
| 355/25ZR21 PZERO | B (ECE) | 63% | 87% | 120 µm | Pass | 370 |
| 305/30R20 Prototype | B (ECE) | 63% | 87% | 120 µm | Pass | 390 |

Also in this case, the gluing methodology according to the present invention has led to the pass of the test for all the used types of tyre.

### Example C

The Applicant has also tested the effects of the variation of the adhesive thickness in monitoring devices having spatially selective gluing with the same extension of the second region. The indoor test performed is the same as performed in example A with GB/T certification test.

According to the Applicant, the use of a thinner adhesive thickness for a given surface covered by adhesive allows to further reduce the aforementioned adhesive accumulation phenomenon, which is believed to be the cause of the failure (e.g. detachment) of the monitoring device.

The following table shows the obtained results:

| **Tyre type** | **Test type** | **Adhesive thickness** | **% extension second region** | **% coupling surface covered by adhesive** | **Result** | **Type of test ending** |
|---|---|---|---|---|---|---|
| 305/30R20 Pzero | A (GB/T) | 120 µm | 63% | 87% | 5'@310 km/h | Failure of tyre/electronics |
| 305/30R20 Pzero | A (GB/T) | 80 µm | 63% | 87% | 7'@310 km/h | Failure of tyre/electronics |

The results show that an adhesive thickness equal to 80 µm allows, for a given rotation speed, to delay (increase of 2 minutes) the failure of the tyre and/or of the electronics of the monitoring device (experimentally occurred due to local overheating) with respect to an adhesive with thickness of 120 µm. Also in this case it is observed that the end of the test is due to the failure of the tyre and/or of the electronics, but not to the detachment of the monitoring device (which, having the spatially selective gluing according to the present invention, maintains the adhesion to the tyre).

### Example D

Tyres comprising monitoring devices with spatially selective gluing with the two different thicknesses of adhesive (i.e. 80 µm and 120 µm) as tested in example C, have also been subjected by the Applicant to a fatigue test (i.e. a stress test of the tyre rolling in an overloaded condition with respect to the respective load index). The test result was positive for both the tyres. In particular, the tyre having an adhesive thickness equal to 120 µm lasted in the test for a time 25% greater than the time of the tyre having an adhesive thickness equal to 80 µm.

The choice of adhesive thickness may therefore depend on the intended use of the tyre. For example, for a racing tyre (e.g. motorsport applications) in which the use at very high speeds is essentially privileged, it may be appropriate to choose reduced adhesive thicknesses (e.g. 80 µm), while for applications for longer road use, it may be convenient to choose greater adhesive thicknesses (e.g. 120 µm).

In conclusion, thanks to the spatially selective gluing according to the present invention, it is possible to obtain considerable improvements on the adhesion efficiency of the monitoring device to the inner surface of the tyre in terms of maximum (linear) speed achieved and/or of duration of gluing for a given speed, with respect to the complete gluing of the monitoring device, also moving the causes of failure under responsibility of the tyre and/or of the electronics (e.g. local overheating) and not of the adhesion of the monitoring device, adhesion which maintains itself firm in all the performed tests.

## Claims

1. Tyre (10) comprising a monitoring device (1), wherein said monitoring device (1) comprises a housing portion (2) and a base portion (3) mutually integral, said base portion (3) having a coupling surface (4) in single-piece intended for fixing the monitoring device (1) to the tyre (10), wherein a projection (5) of said housing portion (2) onto said coupling surface (4) has an extension lower than said coupling surface (4),
wherein said monitoring device (1) comprises an electronic unit (8) housed in said housing portion (2),
wherein said monitoring device (1) is fixed to an inner surface (15) of said tyre (10) at a crown portion (16) of said tyre (10) by an adhesive (6) interposed between said coupling surface (4) and said inner surface (15),
wherein a first region (12) of said coupling surface (4) is covered by said adhesive (6) and a second region (13) of said coupling surface (4), complementary to said first region (12), is free of adhesive (6), and wherein said second region (13) is contained within said projection (5) of said housing portion (2) onto said coupling surface (4),
**characterized in that** said adhesive (6) has a thickness less than or equal to 200 µm.

2. Tyre (10) according to claim 1, wherein said first region (12) entirely surrounds said second region (13), wherein said first region (12) is continuous and/or said second region (13) is continuous, and wherein a projection of a centre of mass of said housing portion (2) onto said coupling surface (4) falls in a central position of said second region (13).

3. Tyre (10) according to any one of the previous claims, wherein said housing portion (2) is arranged in substantially central position of said base portion (3), preferably of said coupling surface (4), and wherein said second region (13) is arranged in substantially central position of said projection (5) of said housing portion (2).

4. Tyre (10) according to any one of the previous claims, wherein said second region (13) has a plan extension greater than or equal to 45%, and less than or equal to 95%, of said projection (5) of the housing portion (2), wherein a shape of said second region (13) reproduces, with a scale factor, a shape of said projection (5) of the housing portion (2).

5. Tyre (10) according to any one of the previous claims, wherein a distance (D) measured along the coupling surface (4) between an edge of said second region (13) and an ideal edge of said projection (5) of said housing portion (2) is equal to at least 1 mm, preferably to at least 2 mm, along an entire development of said edge of the second region (13), and wherein said distance is at most 5 mm.

6. Tyre (10) according to any one of the previous claims, wherein said adhesive (6) is a pressure sensitive adhesive selected from the group: acrylic adhesive, silicone adhesive, butyl adhesive, natural rubber-based adhesive, block copolymer-based adhesive.

7. Tyre (10) according to any one of the previous claims, wherein said adhesive (6) has a thickness less than or equal to 150 µm, and wherein said thickness of said adhesive (6) is uniform.

8. Tyre (10) according to any one of the previous claims, wherein said housing portion (2) comprises a rigid body (7) suitable for housing said electronic unit (8), wherein said projection (5) of the housing portion (2) coincides with a projection of said rigid body (7), wherein said electronic unit (8) comprises at least one sensor for sensing at least one of the following physical quantities: temperature, pressure, acceleration, deformation; a processing unit; a transceiver, wherein said monitoring device (1) comprises an electric power supplier (11) electrically connected to said electronic unit (8), wherein said base portion (3) has a perimetral edge free of corners, cusps and/or portions with small curvature radii, wherein said housing portion (2), preferably said rigid body (7), has substantially cylindrical or prismatic shape, wherein said base portion (3) comprises a plurality of reinforcing elements comprising textile or metallic filaments or cords, wherein said textile filaments or cords are made of one or more of the following textile materials: aramid, rayon, polyester, nylon, lyocell, and wherein said reinforcing elements are arranged with a density comprised between 30 cords/dm and 500 cords/dm.

9. Tyre (10) according to any one of the previous claims, wherein said base portion (3) has a circular or oval perimetral edge, or
wherein said base portion (3) has a perimetral edge with wavelike trend along a substantially circular or oval generating line.

10. Tyre (10) according to any one of the previous claims, wherein said monitoring device (1) comprises an encapsulation material (9) which at least partially encloses said electronic unit (8), wherein said encapsulation material (9) realizes with continuity at least part of said housing portion (2) and at least part of said base portion (3) to make said housing portion (2) and said base portion (3) mutually integral, wherein said encapsulation material (9) is a polyurethane material or a polyurea, and wherein reinforcing elements are associated with, or incorporated into, said encapsulation material (9).

11. Tyre (10) according to any one of claims from 1 to 9, wherein said base portion (3) is made by a layer of elastomeric material, wherein said housing portion (2) and said base portion (3) are distinct from each other and they are made mutually integral by gluing with structural adhesive, wherein said structural adhesive is selected from the following group: cyanoacrylate-based adhesive, polyurethane-based adhesive, epoxy adhesive, acrylic adhesive.

## Patentansprüche

1. Reifen (10), umfassend eine Überwachungsvorrichtung (1), wobei die Überwachungsvorrichtung (1) einen Gehäuseabschnitt (2) und einen Basisabschnitt (3) umfasst, die einstückig miteinander verbunden sind, wobei der Basisabschnitt (3) eine Kopplungsfläche (4) in einem Stück aufweist, die dazu bestimmt ist, die Überwachungsvorrichtung (1) an dem Reifen (10) zu befestigen, wobei ein Vorsprung (5) des Gehäuseabschnitts (2) auf die Kopplungsfläche (4) eine Erstreckung aufweist, die geringer als die Kopplungsfläche (4) ist,
wobei die Überwachungsvorrichtung (1) eine elektronische Einheit (8) umfasst, die in dem Gehäuseabschnitt (2) untergebracht ist,
wobei die Überwachungsvorrichtung (1) an einer Innenfläche (15) des Reifens (10) an einem Kronenabschnitt (16) des Reifens (10) durch einen Klebstoff (6) befestigt ist, der zwischen der Kopplungsfläche (4) und der Innenfläche (15) eingefügt ist,
wobei ein erster Bereich (12) der Kopplungsfläche (4) durch den Klebstoff (6) bedeckt ist und ein zweiter Bereich (13) der Kopplungsfläche (4), komplementär zu dem ersten Bereich (12), frei von Klebstoff (6) ist, und wobei der zweite Bereich (13) in dem Vorsprung (5) des Gehäuseabschnitts (2) auf die Kopplungsfläche (4) enthalten ist, **dadurch gekennzeichnet, dass** der Klebstoff (6) eine Dicke von kleiner als oder gleich 200 µm aufweist.

2. Reifen (10) nach Anspruch 1, wobei der erste Bereich (12) den zweiten Bereich (13) vollständig umgibt, wobei der erste Bereich (12) kontinuierlich ist und/oder der zweite Bereich (13) kontinuierlich ist, und wobei ein Vorsprung eines Massenschwerpunkts des Gehäuseabschnitts (2) auf die Kopplungsfläche (4) in eine zentrale Position des zweiten Bereichs (13) fällt.

3. Reifen (10) nach einem der vorstehenden Ansprüche, wobei der Gehäuseabschnitt (2) in einer im Wesentlichen zentralen Position des Basisabschnitts (3) angeordnet ist, bevorzugt der Kopplungsfläche (4), und wobei der zweite Bereich (13) in einer im Wesentlichen zentralen Position des Vorsprungs (5) des Gehäuseabschnitts (2) angeordnet ist.

4. Reifen (10) nach einem der vorstehenden Ansprüche, wobei der zweite Bereich (13) eine ebene Erstreckung von mehr als oder gleich 45 % und kleiner als oder gleich 95 % des Vorsprungs (5) des Gehäuseabschnitts (2) aufweist, wobei eine Form des zweiten Bereichs (13) mit einem Skalierungsfaktor eine Form des Vorsprungs (5) des Gehäuseabschnitts (2) reproduziert.

5. Reifen (10) nach einem der vorstehenden Ansprüche, wobei ein Abstand (D), gemessen entlang der Kopplungsfläche (4) zwischen einem Rand des zweiten Bereichs (13) und einem idealen Rand des Vorsprungs (5) des Gehäuseabschnitts (2), mindestens gleich 1 mm, bevorzugt mindestens 2 mm, entlang einer gesamten Entwicklung des Rands des zweiten Bereichs (13) ist, und wobei der Abstand höchstens 5 mm beträgt.

6. Reifen (10) nach einem der vorstehenden Ansprüche, wobei der Klebstoff (6) ein druckempfindlicher Klebstoff ist, der aus der folgenden Gruppe ausgewählt ist: Acrylklebstoff, Silikonklebstoff, Butylklebstoff, Klebstoff auf Naturkautschukbasis, Klebstoff auf Blockcopolymerbasis.

7. Reifen (10) nach einem der vorstehenden Ansprüche, wobei der Klebstoff (6) eine Dicke von kleiner als oder gleich 150 µm aufweist und wobei die Dicke des Klebstoffs (6) einheitlich ist.

8. Reifen (10) nach einem der vorstehenden Ansprüche, wobei der Gehäuseabschnitt (2) einen starren Körper (7) umfasst, der zum Unterbringen der elektronischen Einheit (8) geeignet ist, wobei der Vorsprung (5) des Gehäuseabschnitts (2) mit einem Vorsprung des starren Körpers (7) zusammenfällt, wobei die elektronische Einheit (8) mindestens einen Sensor zum Erfassen mindestens einer der folgenden physikalischen Größen umfasst: Temperatur, Druck, Beschleunigung, Verformung; eine Verarbeitungseinheit; einen Sendeempfänger, wobei die Überwachungsvorrichtung (1) einen elektrischen Stromversorger (11) umfasst, der elektrisch mit der elektronischen Einheit (8) verbunden ist, wobei der Basisabschnitt (3) einen Umfangsrand aufweist, der frei von Ecken, Spitzen und/oder Abschnitten mit kleinen Krümmungsradien ist, wobei der Gehäuseabschnitt (2), bevorzugt der starre Körper (7), im Wesentlichen eine zylindrische oder prismatische Form aufweist, wobei der Basisabschnitt (3) eine Vielzahl von Verstärkungselementen umfasst, die Textil- oder metallische Filamente oder Kordeln umfassen, wobei die Textilfilamente oder -kordeln aus einem oder mehreren der folgenden Textilmaterialien hergestellt sind: Aramid, Kunstseide, Polyester, Nylon, Lyocell, und wobei die Verstärkungselemente mit einer Dichte zwischen 30 Kordeln/dm und 500 Kordeln/dm angeordnet sind.

9. Reifen (10) nach einem der vorstehenden Ansprüche, wobei der Basisabschnitt (3) einen kreisförmigen oder ovalen Umfangsrand aufweist oder
wobei der Basisabschnitt (3) einen Umfangsrand mit einem wellenförmigen Verlauf entlang einer im Wesentlichen kreisförmigen oder ovalen Mantellinie aufweist.

10. Reifen (10) nach einem der vorstehenden Ansprüche, wobei die Überwachungsvorrichtung (1) ein Einkapselungsmaterial (9) umfasst, das die elektronische Einheit (8) mindestens teilweise umschließt, wobei das Einkapselungsmaterial (9) mindestens einen Teil des Gehäuseabschnitts (2) und mindestens einen Teil des Basisabschnitts (3) mit Kontinuität ausbildet, um den Gehäuseabschnitt (2) und den Basisabschnitt (3) einstückig miteinander zu verbinden, wobei das Einkapselungsmaterial (9) ein Polyurethanmaterial oder ein Polyharnstoff ist, und wobei Verstärkungselemente dem Einkapselungsmaterial (9) zugeordnet oder in dieses eingearbeitet sind.

11. Reifen (10) nach einem der Ansprüche 1 bis 9, wobei der Basisabschnitt (3) aus einer Schicht aus Elastomermaterial hergestellt ist, wobei der Gehäuseabschnitt (2) und der Basisabschnitt (3) sich voneinander unterscheiden und durch Verkleben mit Strukturklebstoff einstückig miteinander verbunden werden, wobei der Strukturklebstoff aus der folgenden Gruppe ausgewählt ist: Klebstoff auf Cyanacrylatbasis, Klebstoff auf Polyurethanbasis, Epoxidklebstoff, Acrylklebstoff.

## Revendications

1. Pneu (10) comprenant un dispositif de surveillance (1), dans lequel ledit dispositif de surveillance (1) comprend une partie de boîtier (2) et une partie de base (3) solidaires, ladite partie de base (3) présentant une surface d'accouplement (4) monobloc destinée à la fixation du dispositif de surveillance (1) au pneu (10), dans lequel une saillie (5) de ladite partie de boîtier (2) sur ladite surface d'accouplement (4) présente une extension inférieure à celle de ladite surface d'accouplement (4),
dans lequel ledit dispositif de surveillance (1) comprend une unité électronique (8) logée dans ladite partie de boîtier (2),
dans lequel ledit dispositif de surveillance (1) est fixé à une surface intérieure (15) dudit pneu (10) au niveau d'une partie de sommet (16) dudit pneu (10) par un adhésif (6) interposé entre ladite surface d'accouplement (4) et ladite surface intérieure (15),
dans lequel une première région (12) de ladite surface d'accouplement (4) est recouverte par ledit adhésif (6) et une seconde région (13) de ladite surface d'accouplement (4), complémentaire de ladite première région (12), est exempte d'adhésif (6), et dans lequel ladite seconde région (13) est contenue à l'intérieur de ladite saillie (5) de ladite partie de boîtier (2) sur ladite surface d'accouplement (4), **caractérisé en ce que** ledit adhésif (6) présente une épaisseur inférieure ou égale à 200 µm.

2. Pneu (10) selon la revendication 1, dans lequel ladite première région (12) entoure entièrement ladite seconde région (13), dans lequel ladite première région (12) est continue et/ou ladite seconde région (13) est continue, et dans lequel une saillie d'un centre de masse de ladite partie de boîtier (2) sur ladite surface d'accouplement (4) tombe dans une position centrale de ladite seconde région (13).

3. Pneu (10) selon l'une quelconque des revendications précédentes, dans lequel ladite partie de boîtier (2) est disposée en position sensiblement centrale de ladite partie de base (3), de préférence de ladite surface d'accouplement (4), et dans lequel ladite seconde région (13) est disposée en position sensiblement centrale de ladite saillie (5) de ladite partie de boîtier (2).

4. Pneu (10) selon l'une quelconque des revendications précédentes, dans lequel ladite seconde région (13) présente une extension en plan supérieure ou égale à 45 %, et inférieure ou égale à 95 %, de ladite saillie (5) de la partie de boîtier (2), dans lequel une forme de ladite seconde région (13) reproduit, avec un facteur d'échelle, une forme de ladite saillie (5) de la partie de boîtier (2).

5. Pneu (10) selon l'une quelconque des revendications précédentes, dans lequel une distance (D) mesurée le long de la surface d'accouplement (4) entre un bord de ladite seconde région (13) et un bord idéal de ladite saillie (5) de ladite partie de boîtier (2) est égale à au moins 1 mm, de préférence à au moins 2 mm, le long d'un développement entier dudit bord de la seconde région (13), et dans lequel ladite distance est d'au plus 5 mm.

6. Pneu (10) selon l'une quelconque des revendications précédentes, dans lequel ledit adhésif (6) est un adhésif sensible à la pression choisi dans le groupe : adhésif acrylique, adhésif silicone, adhésif butyle, adhésif à base de caoutchouc naturel, adhésif à base de copolymère séquencé.

7. Pneu (10) selon l'une quelconque des revendications précédentes, dans lequel ledit adhésif (6) présente une épaisseur inférieure ou égale à 150 µm, et dans lequel ladite épaisseur dudit adhésif (6) est uniforme.

8. Pneu (10) selon l'une quelconque des revendications précédentes, dans lequel ladite partie de boîtier (2) comprend un corps rigide (7) adapté pour loger ladite unité électronique (8), dans lequel ladite saillie (5) de la partie de boîtier (2) coïncide avec une saillie dudit corps rigide (7), dans lequel ladite unité électronique (8) comprend au moins un capteur pour détecter au moins l'une des quantités physiques suivantes : température, pression, accélération, déformation ; une unité de traitement ; un émetteur-récepteur, dans lequel ledit dispositif de surveillance (1) comprend une alimentation électrique (11) connectée électriquement à ladite unité électronique (8), dans lequel ladite partie de base (3) présente un bord périphérique exempt de coins, de cuspides et/ou de parties avec de petits rayons de courbure, dans lequel ladite partie de boîtier (2), de préférence ledit corps rigide (7), présente une forme sensiblement cylindrique ou prismatique, dans lequel ladite partie de base (3) comprend une pluralité d'éléments de renforcement comprenant des filaments ou des cordons textiles ou métalliques, dans lequel lesdits filaments ou cordons textiles sont constitués d'un ou plusieurs des matériaux textiles suivants : aramide, rayonne, polyester, nylon, lyocell, et dans lequel lesdits éléments de renforcement sont disposés avec une densité comprise entre 30 cordons/dm et 500 cordons/dm.

9. Pneu (10) selon l'une quelconque des revendications précédentes, dans lequel ladite partie de base (3) présente un bord périphérique circulaire ou ovale, ou
dans lequel ladite partie de base (3) présente un bord périphérique avec une tendance ondulatoire le long d'une ligne génératrice sensiblement circulaire ou ovale.

10. Pneu (10) selon l'une quelconque des revendications précédentes, dans lequel ledit dispositif de surveillance (1) comprend un matériau d'encapsulation (9) qui entoure au moins partiellement ladite unité électronique (8), dans lequel ledit matériau d'encapsulation (9) réalise avec continuité au moins une partie de ladite partie de boîtier (2) et au moins une partie de ladite partie de base (3) pour rendre ladite partie de boîtier (2) et ladite partie de base (3) mutuellement solidaires, dans lequel ledit matériau d'encapsulation (9) est un matériau polyuréthane ou une polyurée, et dans lequel des éléments de renforcement sont associés avec ou incorporés dans ledit matériau d'encapsulation (9).

11. Pneu (10) selon l'une quelconque des revendications 1 à 9, dans lequel ladite partie de base (3) est constituée d'une couche de matière élastomère, dans lequel ladite partie de boîtier (2) et ladite partie de base (3) sont distinctes l'une de l'autre et sont rendues mutuellement solidaires par collage avec un adhésif structurel, dans lequel ledit adhésif structurel est choisi dans le groupe suivant : adhésif à base de cyanoacrylate, adhésif à base de polyuréthane, adhésif époxy, adhésif acrylique.
